# EUROPEAN PATENT SPECIFICATION

(11) **EP 1 260 112 B1**
(45) Date of publication and mention of the grant of the patent: **19.11.2003**
(21) Application number: 01905822.1
(22) Date of filing: 23.02.2001
(51) Int. Cl.: H04Q 7/38

(54) **INTERSYSTEM HANDOVER WITH MODIFIED PARAMETERS**
ZWISCHENSYSTEM-WEITERREICHEN MIT GEÄNDERTEN PARAMETER
TRANSFERT INTERSYSTEME COMPORTANT DES PARAMETRES MODIFIES

(30) Priority: 28.02.2000 GB 0004671
(43) Date of publication of application: 27.11.2002
(73) Proprietor: Nokia Corporation, 02150 Espoo (FI)
(72) Inventor: KAUHANEN, Timo, Heikki, FIN-02400 Kirkkonummi (FI)
(74) Representative: Ruuskanen, Juha-Pekka
(86) International application number: EP0102131
(87) International publication number: WO01065881

(56) References cited:
- WO-A-96/10305
- WO-A-99/35872
- DE-A- 19 830 841
- GB-A- 2 321 161
- ETSI: "Handover Requirements between UMTS and GSM or other Radio Systems (3G TS 22.129 version 3.2.0)" TECHNICAL SPECIFICATION, December 1999 (1999-12), pages 1-20, XP002143722

## Description

### Field of the Invention

The present invention relates to handover in a communication system, and in particular, but not exclusively, to handover of a connection from a node to another node, wherein the other node requires at least one parameter for the connection that is not employed by the previous node.

### Background of the Invention

Communication networks typically operate in accordance with a given standard or specification which sets out what the various elements of the network are permitted to do and how that should be achieved. For example, the standard may define whether the user or more precisely, user equipment is provided with a circuit switched service or a packet switched service. The standard may also define the communication protocols which shall be used for the connection. The given standard also defines one or more of the required connection parameters. The connection parameters may relate to various features of the connection. The parameters may define features such as the maximum number of traffic channels, quality of service and so on or features that relate to multislot transmission.

In other words, the standard defines the "rules" and parameters on which the communication within the communication system can be based on. Examples of the different standards and/or specifications include, without limiting to these, specifications such as GSM (Global System for Mobile communications) or various GSM based systems (such as GPRS: General Packet Radio Service), AMPS (American Mobile Phone System), DAMPS (Digital AMPS), WCDMA (Wideband Code Division Multiple Access) or CDMA in UMTS (Code Division Multiple Access in Universal Mobile Telecommunications System) and so on.

The user equipment i.e. a terminal that is to be used for communication over a particular communication network has to be implemented in accordance with the predefined "rules" of the network. A terminal may also be arranged to be compatible with more than one standard or specification, i.e. the terminal may communicate in accordance with several different types of communication services. These user equipment are often called as multi-mode terminals, the basic example thereof being a dual-mode mobile station.

A communication network is a cellular radio network consisting of cells. In most cases the cell can be defined as a certain area covered by one or several base transceiver stations (BTS) serving user equipment (UE), such as mobile stations (MS), via a radio interface and possibly connected to a base station subsystem (BSS). Several cells cover a larger area, and form typically a radio coverage area referred to as a location area (LA) or in some standards as a routing area (RA). It should be appreciated that the size of the location area or routing area depends on the system and circumstances, and may equal to one cell or be even smaller, such a part of a coverage area of a base station. A feature of the cellular system is that it provides mobility for the mobile stations, i.e. the mobile stations are enabled to move from a location area to another, and even from a network to another network that is compatible with the standard the mobile station is adapted to.

The user equipment (UE) within one of the cells of the cellular system can be controlled by a node providing controller function. Examples of the controller nodes include a base station controller (BSC), a radio network controller (RNC) and a mobile switching center (MSC), but other control nodes may also be implemented in the network. For example, in the circuit switched GSM (Global System for Mobile) network the controller node is provided by means of a mobile switching center (MSC). In the packet switched UMTS the radio access network thereof is controlled by a radio network controller (RNC). The controller can be connected further to a gateway or linking node, for example a gateway GPRS support node (GGSN) or gateway mobile switching center (GMSC), linking the controller nodes to other parts of the communication system and/or to other communication networks, such as to a PSTN (Public Switched Telecommunications Network) or to a data network, such as to a X.25 based network or to a TCP/IP (Transmission Control Protocol/Internet Protocol) based network. The network may also include nodes for storing information of mobile stations subscribing the networks or visiting the networks, such as appropriate home location registers (HLR) and visitor location registers (VLR).

When user equipment communicates with a communication network, a communication path has been established between the user equipment and an element or node of the network. The network node is typically one of the controller nodes. At least a part of the communication between the user equipment and the actual destination node will then pass through the controller node.

It is possible to transfer i.e. to handover the connection from a first node to a second node. This shall also be possible between two nodes that belong to different network systems. For example, a user equipment having a packet switched (PS) connection with a packet switched network system (e.g. the UMTS) may be handed over to have a circuit switched (CS) connection with a circuit switched network system (e.g. the GSM) and vice versa. The handover of the connection may be required e.g. when the mobile station moves i.e. roams from a cell to another cell. In case the new cell is not served by the same system as the pervious cell, the handover needs to be accomplished between different communication systems.

Documents WO 99/35872 and ETSI: "Handover Requirements between UMTS and GSM or other Radio Systems (3G TS 22.129 version 3.20)"; Technical Specification, discuss handover between two different systems.

The inventor has found that in situations where a handover is to be accomplished between the nodes of different communications systems (i.e. systems that are based on different communication rules), it is possible that the "new" connection cannot be properly set-up due to a difference in the parameters required for the connection by the "new" and the "old" i.e. previous communication systems. An example is a handover from a packet switched connection to a circuit switched connection or vice versa. A more detailed example is a handover of a high speed circuit switched data connection between from UMTS (Universal Mobile Telecommunications System) to GSM (Global System for Mobile communications). In the GSM the high speed data is enabled by a multislot mechanism which requires a certain parameter to be exchanged at the call setup. A corresponding mechanism does not exist in the UMTS, and consequently corresponding parameters are not generated or exchanged at the UMTS-call setup. After a UMTS to GSM handover the multislot parameters, however, are required in the GSM portion of the call. Although the mobile stations may provide these parameters, the (dual-mode) UMTS mobile stations may not be obliged to send any GSM-specific parameters every time they se-up a UMTS-call, and therefore the parameters may need to be provided in some other manner at the intersystem handover. In addition, the tight timing requirements of handovers may not allow any exchange of parameters that are not used by the connection before or during the handover procedure.

### Summary of the Invention

It is an aim of the embodiments of the present invention to address one or several of the above problems.

According to one aspect of the present invention, there is provided a method in a cellular communication system wherein a mobile station is arranged to be served by a first node and a second node, said first and second nodes belonging to a first and second communication system that are based on different rules of communication, comprising the steps of:
establishing a connection between the mobile station and the first node based on predefined parameters;
initiating handover procedure of the connection from the first communication system to the second communication system so that the connection may continue between the mobile station and the second node;
using a default value for at least one connection parameter required to establish the connection between the mobile station and the second node during the handover procedures, the default value being based on a quality of service parameter of the connection between the mobile station and the first node; and
modifying, if determined necessary, the value of said at least one parameter.

According to another aspect of the present invention there is provided a cellular communication system comprising:
a mobile station, a first node and a second node, the first and second nodes being arranged to operate based on different rules of communication, wherein the mobile station may communicate with the first node and the second node and a connection between the mobile station and the first node can be handed over to a connection between the mobile station and the second node, the set-up of a connection between the mobile station and the second node being based on at least one parameter that is different from the parameters required for the set-up of the connection between the mobile station and the first node;
a controller for determining a default value for said at least one different parameter based on a quality of service parameter of the connection between the mobile station and the first node to be used for setting up the connection between the mobile station and the second node during the handover procedures; and
means for modifying the value of said at least one parameter.

The embodiments of the invention may provide a handover procedure of a communication connection from a first node to a second node of a communication system even in instances where the second node cannot base the connection on one or more of the connection parameters used by the first node for the connection. The further embodiments may assist in meeting the timing requirements of the handover proceedings even in a handover between nodes that are designed based on different standards and/or specifications.

### Brief Description of Drawings

For better understanding of the present invention, reference will now be made by way of example to the accompanying drawings in which:
Figure 1 shows a network arrangement where the embodiments of the present invention may be implemented;
Figure 2 discloses in more detail a dual-mode network arrangement; and
Figure 3 is a flowchart illustrating the operation of one embodiment of the present invention.

### Description of Preferred Embodiments of the Invention

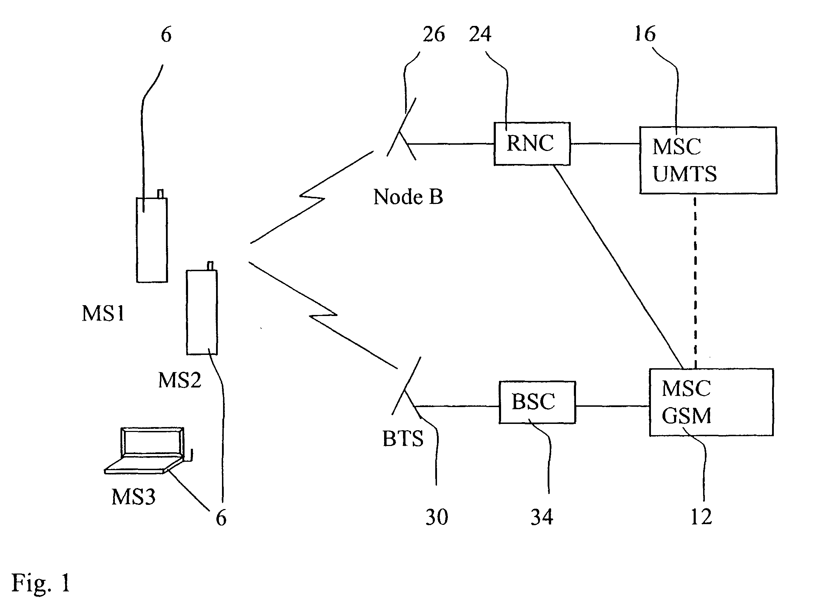

Reference is made to Figure 1 which is a block diagram illustrating a context in which the present invention may be used. That is, a cellular telecommunication system providing both packet switched service and circuit switched services for user equipment. More particularly, Figure 1 illustrates a mobile communication system that allows a plurality of mobile stations MS1, MS2, MS3 to communicate with base (transceiver) stations in via respective wireless connections. Each base station has a radio transceiver capable of transmitting radio signals in downlink to the mobile stations within the cell area and receiving radio signals in uplink from the cell area next to the base station. By means of these signals the base station can communicate with the mobile station (MS) in that cell, which itself includes a radio transceiver.

The base stations of the UMTS may be called to as node B, and thus this term is to be used, for clarity reasons, in the following to distinguish them from the GSM base stations BTS. The mobile stations may have a connection either to the base station BTS or to the Node B. It should be appreciated that the functions of the base station BTS and the Node B may also be implemented by means of one entity, i.e. that a base transceiver station may serve both the GSM system and the UMTS system.

Data to be transmitted from and to the user equipment, which comprise mobile stations, may be speech data, video data or other data. Any packet data transmission may be encoded into a form suitable for transmission at a bit rate which is dependent on the application and the source of the data.

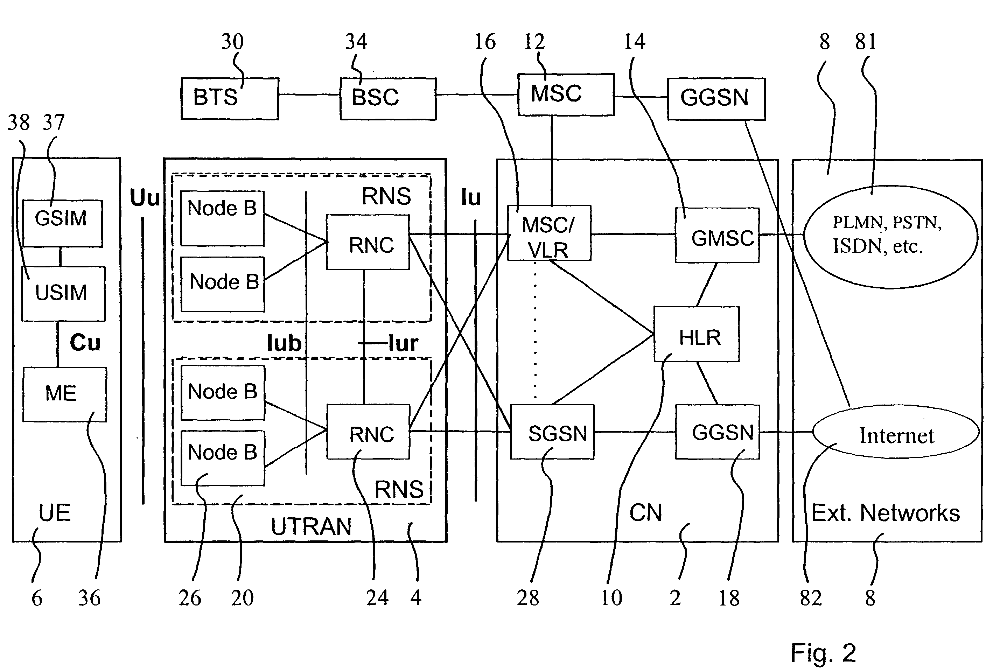

A base station BTS 30 or Node B 26 is connected to a controller node of the cellular network. Thus, during a connection, a mobile station (MS) is connected to a controller node via the base station or the Node B. Examples of the controller include a base station controller BSC 34, a radio network controller RNC 24 and mobile switching centers MSC 12 and 16 (GSM and UMTS sides, respectively), the operation of which will be explained in more detail below with reference to Figure 2. It should be appreciated that other control nodes may also be used for the implementation of the network control function.

The user equipment UE 6 comprise dual-mode mobile stations that may communicate via the BTS of the GSM system and the Node B of the UMTS system. The location of the mobile station 6 could be fixed (for example if it is providing radio communications for a fixed site) or the MS could be moveable (for example if it is a hand portable transceiver or "mobile phone"). When the mobile station is moveable it may move between cells of the cellular radio system. Therefore, as it moves from one cell (the "old cell") to another cell (the "new cell") there is a need to hand it over from communication with the base station and associated network apparatus of the old cell to the base station and associated network apparatus of the new cell without dropping the call. However, it should be appreciated that there may be various other reasons than roaming for the handover, such as overload situations and high priority calls forcing a handover of earlier connections.

The packet data service may be a connectionless service where information symbols are transmitted within data packets. The size and length of the data packets may vary. The information symbols are typically carried by means of packet data bearers. The transmission speed of a bearer is defined by a parameter referred to as bitrate. More particularly, bitrate defines the bit rate that has been allocated for a user of the packet data services. Packet data traffic may include various kinds of data transmission, such as short messages or text only emails and transmission of large documents in the background and interactive browsing of the world wide web (WWW).

Figure 2 shows in more detail a mobile telephone system structure enabling packet switched PS and circuit switched CS traffic. The main parts of the illustrated mobile telephone system are: a UMTS core network CN 2, a UMTS terrestrial radio access network UTRAN 4, a GSM network, and user equipment UE 6. The core network CN 2 and/or the GSM network can be connected to external networks 8, which can be either Circuit Switched CS networks 81 (e.g. public land mobile network PLMN, public circuit switched network PSTN, integrated services digital network ISDN) or Packet Switched PS networks 82 (e.g. the TCP/IP protocol Internet). The interface between the core network CN 2 and the UMTS terrestrial radio access network UTRAN 4 is called the Iu interface, and the interface between the UMTS terrestrial radio access network UTRAN 4 and the user equipment UE 6 is called the Uu interface.

The core network CN 2 of Figure 2 is composed of a Home Location Register HLR 10, a Mobile Services Switching Centre/Visitor Location Register MSC/VLR12, a Gateway MSC GMSC 14, a Serving GPRS (General Packet Radio Service) Support Node SGSN 28 and a Gateway GPRS Support Node GGSN 18.

The UTRAN 4 is composed of radio network subsystems RNS 20 and 22. It should be appreciated that more or less than two RNSs my be employed by a UTRAN. The interface between two radio network subsystems RNSs is called the Iur interface. The radio network subsystems RNS 20 and 22 are composed of a radio network controller RNC 24 and one or more node Bs 26. As explained above, the RNC of the UTRAN logically corresponds to the BSC 34 of the GSM (global system for mobile communications) standard. The interface between the radio network controller RNC 24 and node B 26 is called the Iub interface.

The Radio Network Controller RNC 24 is the network element responsible for the control of the radio resources of UTRAN 4. The RNC 24 interfaces the core network CN 2 (normally to one MSC 12 and one SGSN 28) and also terminates the Radio Resource Control RRC protocol that defines the messages and procedures between the user equipment UE 6 and UTRAN 4. The RNC 24 logically corresponds to the base station controller BSC 34 of the GSM standard. In Figure 2 each radio network controller RNC of the radio access network 4 may be connected to two CN nodes (MSC/VLR and SGSN). However, it should be appreciated that in some network topologies it may be possible that one RNC is connected only to one CN node or to more than two CN nodes.

The main function of the Node B 26 is to perform the air interface L1 (Layer 1) processing (channel coding and interleaving, rate adaptation, spreading, etc). It also performs some basic Radio Resource Management operation such as the inner loop power control. It logically corresponds to the Base Transceiver Station BTS of the GSM standard.

The dual-mode mobile station may consist of the Mobile Equipment ME 36, GSM Subscriber Identity Module GSIM 37 and the UMTS Subscriber Identity Module USIM 38. The mobile equipment ME 36 is the radio terminal used for radio communication over the Uu interface between the user equipment UE 6 and the UTRAN 4 and over the interface between UE and the BTS 30. The GSIM 37 and the USIM 38 is typically a smart card that holds the subscriber identity, performs authentication algorithms, and stores authentication and encryption keys and some subscription information that is needed at the terminal. These GSIM and USIM function may me implemented by one or two cards, depending on the application.

In the GSM multiple traffic channels TCHs can be combined to form a high speed data bearer. This is indicated for the network nodes by appropriate parameters (e.g. by a parameter indicating the maximum number of traffic channels) in a Bearer Capability Information Element BCIE. However, these parameters are not needed in the UMTS call set-up, but the UTRAN function provides data bearers that may be of any size. The UMTS supports only a part of the fields of the BCIE. Although the multislot parameters are not needed at the setup of the original UMTS-call between the mobile station 6 and the UMTS MSC 16, they are needed to be able to set-up the connection between the mobile station and the target GSM MSC 12.

The following describes a procedure enabling handover from the MSC 16 of the packet switched UMTS to the MSC 12 of the circuit switched GSM. In the embodiment the GSM side bearer is set-up at a UMTS to GSM handover based on employment of a default set of parameters. The mobile station MS is allowed to modify these parameters after handover. These default parameters may be obtained based on mapping from the UMTS side bearer quality of service (QoS). The default set of parameters specifies e.g. the number of traffic channels which can be calculated from UMTS bitrate. That is, the missing values of the BCIE fields are determined by an appropriate network element. The default parameters may be defined beforehand e.g. by the network operator.

The handover is procedures may be based on a default set of parameters e.g. such that the current bearer attributes are mapped into 'sufficient' values. For example, a 28,8 kbps data bearer in the packet switched network will require three 9.6 kbps traffic channels in the switched network side, and thus maximum_number_traffic_channels parameter is given a value of 3. That is, in the GSM network three traffic channels are required in order to be able to continue the communication.

The determination of the appropriate default values for the parameters may be accomplished by the target MSC 12. It should be appreciated that the determination may also be accomplished by the source MSC 16 i.e. the previous controller or any other appropriate controller element of the communication system.

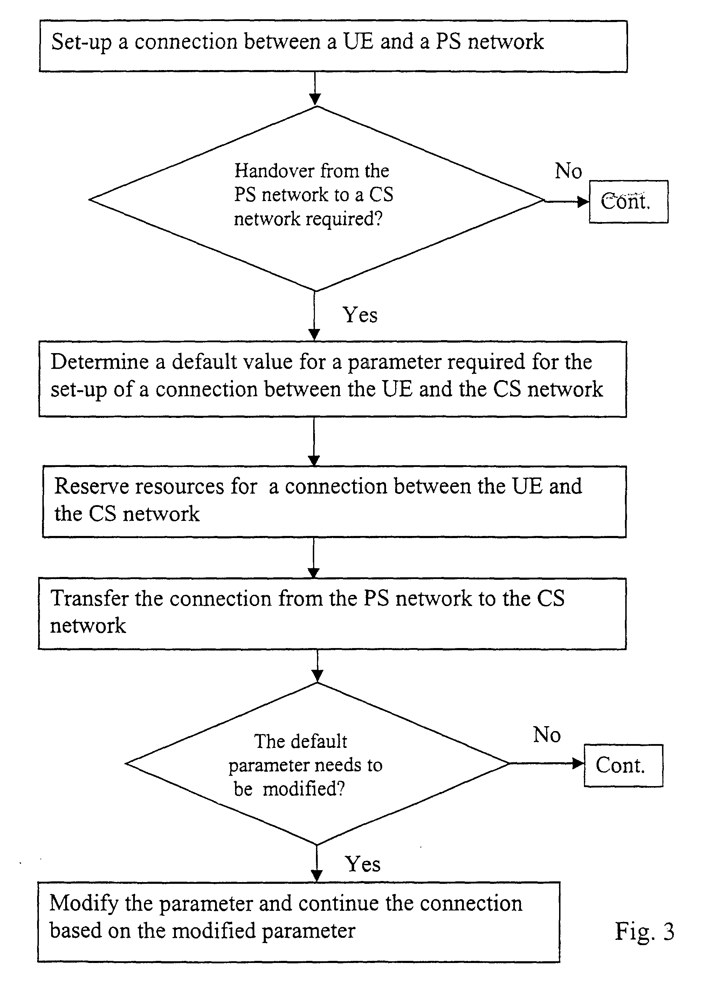

As is shown by Figure 3, a communication path is established between the target MSC 12 and the mobile station 6 after initiation of the handover procedure. Necessary radio resources may be reserved for the connection based on the default parameters that may be based information obtained through the mapping. The actual handover is preferably accomplished only after the required resources are reserved for the communication path between the mobile station and the target MSC 12 via the BSC 34, BTS 12 and wireless interface between the BTS 12 and the mobile station 6. That is, the connection between the mobile station 6 and the MSC 12 is negotiated based on default values before the actual handover procedure.

The target GSM MSC may initiate a MODIFY procedure, if this is required to negotiate the assumed multislot parameters with the mobile station. The MODIFY procedure is a feature of the GSM that is used for a new purpose in this embodiment. In other words, the target MSC may send a MODIFY-message which contains a BCIE with the default multislot parameters. This may be done after the actual handover procedure, i.e. when the time factor is not as critical as it is during the handover. However, the modify procedure may also be accomplished in during the set-up of the connection between the mobile station and the target MSC.

The mobile station MS may accept the new parameters by responding with a MODIFY_COMPLETE-message with the proposed parameters. In case the mobile station will accept the connection but not the proposed parameters, it may respond with altered parameters. The mobile station MS may also reject the connection and the proposed parameters by MODIFY_REJECT in which case the call will be disconnected.

The data is described as being in packet form. In alternative embodiments of the invention the data may be sent in any suitable format.

It should be appreciated that the GSM MSC node and the UMTS MSC node may be implemented within one entity or network node.

The embodiments may make it unnecessary for the dual mode (GSM-UMTS) mobile station to generate and send any GSM-specific parameters at every UMTS-call setup, and therefore it is possible to avoid a procedure that may be unnecessary for the most of the UMTS calls. The embodiments also meet the tight timing requirements of the handover.

It is also noted herein that while the above describes exemplifying embodiments of the invention, there are several variations and modifications which may be made to the disclosed solution without departing from the scope of the present invention as defined in the appended claims.

## Claims

1. A method in a cellular communication system wherein a mobile station [6] is arranged to be served by a first node [24] and a second node [34], said first [24] and second nodes [34] belonging to a first and second communication system that are based on different rules of communication, comprising the steps of:
establishing a connection between the mobile station [6] and the first node [24] based on predefined parameters;
initiating handover procedure of the connection from the first communication system to the second communication system so that the connection may continue between the mobile station [6] and the second node [34]; **characterized by** comprising the steps of:
using a default value for at least one connection parameter required to establish the connection between the mobile station [6] and the second node [34] during the handover procedures, the default value being based on a quality of service parameter of the connection between the mobile station [6] and the first node; and
modifying, if determined necessary, the value of said at least one parameter.

2. A method as claimed in claim 1, wherein the connection to be handed over is a data connection.

3. A method as claimed in claim 2, wherein the data connection is a high speed data connection.

4. A method as claimed in any preceding claim, wherein the first node [24] is a controller of a packet switched communication network.

5. A method as claimed in claim 4, wherein the controller is a radio access network controller.

6. A method as claimed in any preceding claim, wherein the second node [34] is a controller of a circuit switched communication network.

7. A method as claimed in claim 6, wherein the controller of the circuit switched communication network is a mobile switching centre [12].

8. A method as claimed in any preceding claim, wherein said default value of the parameter comprises a parameter indicating the number of traffic channels for a circuit switched connection.

9. A method as claimed in claim 8, wherein said default value for the parameter indicating the number of traffic channels is determined based on the bitrate of a packet switched connection between the mobile station [6] and the first node [24].

10. A method as claimed in any preceding claim, wherein the default value of the parameter is determined by mapping at least one of the bearer characteristics of the connection between the mobile station [6] and the first node [24] in characteristic of the connection between the mobile station [6] and the second node [34].

11. A method as claimed in any of the preceding claims, wherein the step of modifying comprises:
transmitting modify request from the second node [34] to the mobile station [6], the request containing bearer capability information and said at least one default parameter;
determining whether the proposed default parameters are acceptable by the mobile station [6]; and
transmitting a response from the mobile station [6] to the second node [34] indicating the result of the determination.

12. A method as claimed in claim 11, wherein the response comprises one of the following information:
modification completed acknowledgement together with said at least one default parameter;
modification completed acknowledgement together with at least one parameter that is modified from the default parameter; or modification rejected announcement.

13. A cellular communication system comprising:
a mobile station [6] , a first node [24] and a second node [34], the first [24] and second nodes [34] being arranged to operate based on different rules of communication, wherein the mobile station [6] may communicate with the first node [24] and the second node [34] and a connection between the mobile station [6] and the first node [24] can be handed over to a connection between the mobile station [6] and the second node [34], the set-up of a connection between the mobile station [6] and the second node [34] being based on at least one parameter that is different from the parameters required for the set-up of the connection between the mobile station [6] and the first node; **characterized by**:
a controller for determining a default value for said at least one different parameter based on a quality of service parameter of the connection between the mobile station [6] and the first node [24] to be used for setting up the connection between the mobile station [6] and the second node [34] during the handover procedures; and
means for modifying the value of said at least one parameter.

14. A communication system as claimed in claim 13, wherein the connection to be handed over is a data connection.

15. A communication system as claimed in claim 14, wherein the data connection is a high speed data connection.

16. A communication system as claimed in any of claims 13 to 15, wherein the first node [24] is a controller of a packet switched communication network.

17. A communication system as claimed in claim 16, wherein the controller is a radio access network controller.

18. A communication system as claimed in any of claims 13 to 17, wherein the second node [34] is a controller of a circuit switched communication network.

19. A communication system as claimed in claim 18, wherein the controller of the circuit switched communication network is a mobile switching centre [12].

20. A communication system as claimed in any of claims 13 to 19, wherein said parameter comprises a parameter indicating the number of traffic channels for a circuit switched connection.

21. A communication system as claimed in claim 20, wherein the controller is adapted to determine said parameter indicating the number of traffic channels based on the bitrate of a packet switched connection between the mobile station [6] and the first node.

22. A communication system as claimed in any of claims 13 to 21, wherein the default parameter is determined by mapping at least one of bearer characteristics of the connection between the mobile station [6] and the first node [24] in characteristic of the connection between the mobile station [6] and the second node [34].

23. A communication system as claimed in any of claims 13 to 22, wherein the second node [34] is adapted to generate and transmit a modify request to the mobile station [6], the request containing bearer capability information and said at least one default parameter, and the mobile station [6] is adapted to determine whether the proposed default parameters are acceptable and to generate and transmit a response to the second node [34] indicating the result of the determination.

24. A communication system as claimed in claim 23, wherein the response comprises one of the following information:
modification completed acknowledgement together with said at least one default parameter;
modification completed acknowledgement together with at least one parameter that is modified from the default parameter; or
modification rejected announcement.

## Patentansprüche

1. Verfahren in einem zellularen Kommunikationssystem, bei dem eine Mobilstation (6) eingerichtet ist, von einem ersten Knoten (24) und einem zweiten Knoten (34) bedient zu werden, wobei der erste (24) und der zweite Knoten (34) zu einem ersten und einem zweiten Kommunikationssystem gehören, die auf unterschiedlichen Kommunikationsregeln basieren, mit den Schritten:
Herstellen einer Verbindung zwischen der Mobilstation (6) und dem ersten Knoten (24) auf Grundlage vordefinierter Parameter;
Initiieren eines derartigen Weiterreichungsvorgangs der Verbindung von dem ersten Kommunikationssystem zu dem zweiten Kommunikationssystem, dass die Verbindung zwischen der Mobilstation (6) und dem zweiten Knoten (34) weiterbestehen kann; **gekennzeichnet durch** die Schritte:
Verwenden eines Vorgabewerts für zumindest einen zum Herstellen der Verbindung zwischen der Mobilstation (6) und dem zweiten Knoten (34) während der Weiterreichungsvorgänge benötigten Verbindungsparameter, wobei der Vorgabewert auf einem Dienstgüte-Parameter der Verbindung zwischen der Mobilstation (6) und dem ersten Knoten basiert; und
Modifizieren des Werts des zumindest einen Parameters, wenn für notwendig bestimmt.

2. Verfahren gemäß Anspruch 1, bei dem die weiterzureichende Verbindung eine Datenverbindung ist.

3. Verfahren gemäß Anspruch 2, bei dem die Datenverbindung eine Hochgeschwindigkeits-Datenverbindung ist.

4. Verfahren gemäß einem der vorangehenden Ansprüche, bei dem der erste Knoten (24) eine Steuereinrichtung eines paketvermittelten Kommunikationsnetzwerks ist.

5. Verfahren gemäß Anspruch 4, bei dem die Steuereinrichtung eine Funkzugangs-Netzwerksteuereinrichtung ist.

6. Verfahren gemäß einem der vorangehenden Ansprüche, bei dem der zweite Knoten (34) eine Steuereinrichtung eines schaltungsvermittelten Kommunikationsnetzwerks ist.

7. Verfahren gemäß Anspruch 6, bei dem die Steuereinrichtung des schaltungsvermittelten Kommunikationsnetzwerks eine Mobilvermittlungsstelle (12) ist.

8. Verfahren gemäß einem der vorangehenden Ansprüche, bei dem der Vorgabewert des Parameters einen Parameter aufweist, der die Anzahl von Verkehrskanälen für eine schaltungsvermittelte Verbindung angibt.

9. Verfahren gemäß Anspruch 8, bei dem der Vorgabewert für den die Anzahl von Verkehrskanälen angebenden Parameter auf Grundlage der Bitrate einer paketvermittelten Verbindung zwischen der Mobilstation (6) und dem ersten Knoten (24) bestimmt wird.

10. Verfahren gemäß einem der vorangehenden Ansprüche, bei dem der Vorgabewert des Parameters durch Abbilden von zumindest einer der Träger-Eigenschaften der Verbindung zwischen der Mobilstation (6) und dem ersten Knoten (24) auf eine Eigenschaft der Verbindung zwischen der Mobilstation (6) und dem zweiten Knoten (34) bestimmt wird.

11. Verfahren gemäß einem der vorangehenden Ansprüche, bei dem der Schritt des Modifizierens aufweist:
Übertragen einer Modifikationsanforderung von dem zweiten Knoten (34) an die Mobilstation (6), wobei die Anforderung Trägerleistungsfähigkeits-Informationen und den zumindest einen Vorgabeparameter enthält;
Bestimmen durch die Mobilstation (6), ob die vorgeschlagenen Vorgabeparameter akzeptabel sind; und
Übertragen einer Antwort von der Mobilstation (6) an den zweiten Knoten (34), die das Ergebnis der Bestimmung angibt.

12. Verfahren gemäß Anspruch 11, bei dem die Antwort eine der folgenden Informationen aufweist:
eine Modifikationsbeendigungs-Bestätigung zusammen mit dem zumindest einen Vorgabeparameter;
eine Modifikationsbeendigungs-Bestätigung zusammen mit zumindest einem Parameter, der gegenüber dem Vorgabeparameter modifiziert ist; oder
eine Modifikationszurückweisungs-Meldung.

13. Zellulares Kommunikationssystem mit:
einer Mobilstation (6), einem ersten Knoten (24) und einem zweiten Knoten (34), wobei der erste (24) und der zweite Knoten (34) eingerichtet sind, basierend auf unterschiedlichen Kommunikationsregeln zu arbeiten, wobei die Mobilstation (6) mit dem ersten Knoten (24) und dem zweiten Knoten (34) kommunizieren kann, und
eine Verbindung zwischen der Mobilstation (6) und dem ersten Knoten (24) auf eine Verbindung zwischen der Mobilstation (6) und dem zweiten Knoten (34) weitergereicht werden kann, wobei der Aufbau einer Verbindung zwischen der Mobilstation (6) und dem zweiten Knoten (34) auf zumindest einem Parameter basiert, der sich von den für den Aufbau der Verbindung zwischen der Mobilstation (6) und dem ersten Knoten (24) benötigten Parametern unterscheidet; **gekennzeichnet durch**:
eine Steuereinrichtung zum Bestimmen eines Vorgabewerts für den zumindest einen unterschiedlichen Parameter auf Grundlage eines Dienstgüte-Parameters der Verbindung zwischen der Mobilstation (6) und dem ersten Knoten (24), der zum Aufbauen der Verbindung zwischen der Mobilstation (6) und dem zweiten Knoten (34) während der Weiterreichungsvorgänge zu verwenden ist; und
eine Einrichtung zum Modifizieren des Werts des zumindest einen Parameters.

14. Kommunikationssystem gemäß Anspruch 13, bei dem die weiterzureichende Verbindung eine Datenverbindung ist.

15. Kommunikationssystem gemäß Anspruch 14, bei dem die Datenverbindung eine Hochgeschwindigkeits-Datenverbindung ist.

16. Kommunikationssystem gemäß einem der Ansprüche 13 bis 15, bei dem der erste Knoten (24) eine Steuereinrichtung eines paketvermittelten Kommunikationsnetzwerks ist.

17. Kommunikationssystem gemäß Anspruch 16, bei dem die Steuereinrichtung eine Funkzugangs-Netzwerksteuereinrichtung ist.

18. Kommunikationssystem gemäß einem der Ansprüche 13 bis 17, bei dem der zweite Knoten (34) eine Steuereinrichtung eines schaltungsvermittelten Kommunikationsnetzwerks ist.

19. Kommunikationssystem gemäß Anspruch 18, bei dem die Steuereinrichtung des schaltungsvermittelten Kommunikationsnetzwerks eine Mobilvermittlungsstelle (12) ist.

20. Kommunikationssystem gemäß einem der Ansprüche 13 bis 19, bei dem der Parameter einen Parameter aufweist, der die Anzahl von Verkehrskanälen für eine schaltungsvermittelte Verbindung angibt.

21. Kommunikationssystem gemäß Anspruch 20, bei dem die Steuereinrichtung eingerichtet ist, den die Anzahl von Verkehrskanälen angebenden Parameter auf Grundlage der Bitrate einer paketvermittelten Verbindung zwischen der Mobilstation (6) und dem ersten Knoten zu bestimmen.

22. Kommunikationssystem gemäß einem der Ansprüche 13 bis 21, bei dem der Vorgabeparameter durch Abbilden von zumindest einer der Träger-Eigenschaften der Verbindung zwischen der Mobilstation (6) und dem ersten Knoten (24) auf eine Eigenschaft der Verbindung zwischen der Mobilstation (6) und dem zweiten Knoten (34) bestimmt wird.

23. Kommunikationssystem gemäß einem der Ansprüche 13 bis 22, bei dem der zweite Knoten (34) zum Erzeugen und Übertragen einer Modifikationsanforderung an die Mobilstation (6) eingerichtet ist, wobei die Anforderung Trägerleistungsfähigkeits-Informationen und den zumindest einen Vorgabeparameter enthält, und die Mobilstation (6) zum Bestimmen eingerichtet ist, ob die vorgeschlagenen Vorgabeparameter akzeptabel sind, und zum Erzeugen und Übertragen einer Antwort an den zweiten Knoten (34), die das Ergebnis der Bestimmung angibt.

24. Kommunikationssystem gemäß Anspruch 23, bei dem die Antwort eine der folgenden Informationen aufweist:
eine Modifikationsbeendigungs-Bestätigung zusammen mit dem zumindest einen Vorgabeparameter;
eine Modifikationsbeendigungs-Bestätigung zusammen mit zumindest einem Parameter, der gegenüber dem Vorgabeparameter modifiziert ist; oder
eine Modifikationszurückweisungs-Meldung.

## Revendications

1. Procédé dans un système de communication cellulaire dans lequel une station mobile (6) est agencée pour être desservie par un premier noeud (24) et un deuxième noeud (34), lesdits premier (24) et deuxième (34) noeuds appartenant à des premier et deuxième systèmes de communication qui sont basés sur différentes règles de communication, comprenant les étapes consistant à :
établir une connexion entre la station mobile (6) et le premier noeud (24) sur la base de paramètres prédéfinis ;
lancer une procédure de transfert de la connexion du premier système de communication vers le deuxième système de communication de sorte que la connexion puisse se poursuivre entre la station mobile (6) et le deuxième noeud (34) ; **caractérisé en ce qu'**il comprend les étapes consistant à :
utiliser une valeur par défaut pour au moins un paramètre de connexion nécessaire pour établir la connexion entre la station mobile (6) et le deuxième noeud (34) pendant les procédures de transfert , la valeur par défaut étant basée sur un paramètre de qualité de service de la connexion entre la station mobile (6) et le premier noeud ; et
modifier, si cela est déterminé comme nécessaire, la valeur dudit au moins un paramètre.

2. Procédé selon la revendication 1, dans lequel la connexion devant faire l'objet d'un transfert est une connexion de données.

3. Procédé selon la revendication 2, dans lequel la connexion de données est une connexion de données à grande vitesse.

4. Procédé selon l'une quelconque des revendications précédentes, dans lequel le premier noeud (24) est un contrôleur d'un réseau de communication à commutation de paquets.

5. Procédé selon la revendication 4, dans lequel le contrôleur est un contrôleur de réseau d'accès radio.

6. Procédé selon l'une quelconque des revendications précédentes, dans lequel le deuxième noeud (34) est un contrôleur d'un réseau de communication à commutation de circuits.

7. Procédé selon la revendication 6, dans lequel le contrôleur du réseau de communication à commutation de circuits est un centre de commutation du service mobile (12).

8. Procédé selon l'une quelconque des revendications précédentes, dans lequel ladite valeur par défaut du paramètre comprend un paramètre indiquant le nombre de canaux de trafic pour une connexion à commutation de circuits.

9. Procédé selon la revendication 8, dans lequel ladite valeur par défaut pour le paramètre indiquant le nombre de canaux de trafic est déterminée sur la base du débit binaire d'une connexion à commutation de paquets entre la station mobile (6) et le premier noeud (24).

10. Procédé selon l'une quelconque des revendications précédentes, dans lequel la valeur par défaut du paramètre est déterminée en mappant au moins l'une des caractéristiques de support de la connexion entre la station mobile (6) et le premier noeud (24) en caractéristique de la connexion entre la station mobile (6) et le deuxième noeud (34).

11. Procédé selon l'une quelconque des revendications précédentes, dans lequel l'étape de modification comprend :
la transmission d'une requête de modification du deuxième noeud (34) à la station mobile (6), la requête contenant des informations de capacité de support et ledit au moins un paramètre par défaut ;
la détermination si les paramètres par défaut proposés sont acceptables pour la station mobile (6) ; et
la transmission d'une réponse de la station mobile (6) au deuxième noeud (34) indiquant le résultat de la détermination.

12. Procédé selon la revendication 11, dans lequel la réponse comprend l'une des informations suivantes :
l'acquittement de modification achevée ainsi que ledit au moins un paramètre par défaut ;
l'acquittement de modification achevée ainsi qu'au moins un paramètre qui est modifié par rapport au paramètre par défaut ; ou
l'annonce de modification rejetée.

13. Système de communication cellulaire comprenant :
une station mobile (6), un premier noeud (24) et un deuxième noeud (34), les premier (24) et deuxième (34) noeuds étant agencés pour fonctionner sur la base de règles de communication différentes, dans lequel :
la station mobile (6) peut communiquer avec le premier noeud (24) et le deuxième noeud (34) et une connexion entre la station mobile (6) et le premier noeud (24) peut être transformée en une connexion entre la station mobile (6) et le deuxième noeud (34), l'établissement d'une connexion entre la station mobile (6) et le deuxième noeud (34) étant basé sur au moins un paramètre qui est différent des paramètres nécessaires pour l'établissement de la connexion entre la station mobile (6) et le premier noeud ; **caractérisé par** :
un contrôleur pour déterminer une valeur par défaut pour ledit au moins un paramètre différent sur la base d'un paramètre de qualité de service de la connexion entre la station mobile (6) et le premier noeud (24) devant être utilisé pour établir la connexion entre la station mobile (6) et le deuxième noeud (34) pendant les procédures de transfert ; et
des moyens pour modifier la valeur dudit au moins un paramètre.

14. Système de communication selon la revendication 13, dans lequel la connexion devant faire l'objet d'un transfert est une connexion de données.

15. Système de communication selon la revendication 14, dans lequel la connexion de données est une connexion de données à grande vitesse.

16. Système de communication selon l'une quelconque des revendications 13 à 15, dans lequel le premier noeud (24) est un contrôleur d'un réseau de communication à commutation de paquets.

17. Système de communication selon la revendication 16, dans lequel le contrôleur est un contrôleur de réseau d'accès radio.

18. Système de communication selon l'une quelconque des revendications 13 à 17, dans lequel le deuxième noeud (34) est un contrôleur d'un réseau de communication à commutation de circuits.

19. Système de communication selon la revendication 18, dans lequel le contrôleur du réseau de communication à commutation de circuits est un centre de commutation du service mobile (12).

20. Système de communication selon l'une quelconque des revendications 13 à 19, dans lequel ledit paramètre comprend un paramètre indiquant le nombre de canaux de trafic pour une connexion à commutation de circuits.

21. Système de communication selon la revendication 20, dans lequel le contrôleur est adapté pour déterminer ledit paramètre indiquant le nombre de canaux de trafic sur la base du débit binaire d'une connexion à commutation de paquets entre la station mobile (6) et le premier noeud.

22. Système de communication selon l'une quelconque des revendications 13 à 21, dans lequel le paramètre par défaut est déterminé en mappant au moins l'une des caractéristiques de support de la connexion entre la station mobile (6) et le premier noeud (24) en caractéristique de la connexion entre la station mobile (6) et le deuxième noeud (34).

23. Système de communication selon l'une quelconque des revendications 13 à 22, dans lequel le deuxième noeud (34) est adapté pour générer et transmettre une requête de modification à la station mobile (6), la requête contenant des informations de capacité de support et ledit au moins un paramètre par défaut, et la station mobile (6) est adaptée pour déterminer si les paramètres par défaut proposés sont acceptables et pour générer et transmettre une réponse au deuxième noeud (34) indiquant le résultat de la détermination.

24. Système de communication selon la revendication 23, dans lequel la réponse comprend l'une des informations suivantes :
l'acquittement de modification achevée ainsi que ledit au moins un paramètre par défaut ;
l'acquittement de modification achevée ainsi qu'au moins un paramètre qui est modifié par rapport au paramètre par défaut ; ou
l'annonce de modification rejetée.
